# EUROPÄISCHE PATENTSCHRIFT

(11) **EP 4 062 076 B1**
(45) Veröffentlichungstag und Bekanntmachung des Hinweises auf die Patenterteilung: **09.08.2023**
(21) Anmeldenummer: 20731839.5
(22) Anmeldetag: 08.06.2020
(51) Int. Cl.: F16C 17/12, F16C 29/02, F16C 33/12, F16C 33/14, F16C 17/02, F16C 17/04, F16C 17/10

(54) **HERSTELLUNGSVERFAHREN EINER GLEITSCHICHT EINES GLEITLAGERS UNTER VERWENDUNG EINER LEGIERUNG UND/ODER EINES MATERIALS**
METHOD FOR PRODUCING A SLIDING LAYER OF A SLIDING-CONTACT BEARING USING AN ALLOY AND/OR A MATERIAL
PROCÉDÉ DE FABRICATION D'UNE COUCHE ANTIFRICTION D'UN PALIER LISSE AU MOYEN D'UN ALLIAGE ET/OU D'UN MATÉRIAU

(30) Priorität: 22.11.2019 DE 102019131591
(43) Veröffentlichungstag der Anmeldung: 28.09.2022
(73) Patentinhaber: RENK GmbH, 86159 Augsburg (DE)
(72) Erfinder: HENTSCHKE, Christoph, 30173 Hannover (DE); LIMMER, Martin, 31157 Sarstedt (DE); CONINX, Christian, 31787 Hameln (DE)
(74) Vertreter: Schlotter, Alexander Carolus Paul
(86) Internationale Anmeldenummer: PCT/EP2020/065762
(87) Internationale Veröffentlichungsnummer: WO 2021/098994

(56) Entgegenhaltungen:
- EP-A2- 1 990 127
- DE-A1- 3 209 604
- DE-A1-102004 018 921
- DE-A1-102005 059 544
- DE-A1-102006 023 384
- DE-A1-102006 023 397
- DE-A1-102017 129 361
- DE-A1-102017 218 592

## Beschreibung

Die Erfindung betrifft die Verwendung einer Legierung und/oder eines Materials, wie zum Beispiel aus der DE 32 09 604 A1 bekannt, zur Herstellung einer Gleitschicht eines hydrodynamischen Gleitlagers und ein Herstellungsverfahren einer Gleitschicht eines hydrodynamischen Gleitlagers unter Verwendung der Legierung und/oder des Materials, insbesondere von Zinnbasislegierungen sowie Bronze- und Aluminiumlegierungen.

Für die Herstellung von hochbelastbaren Metall-Beschichtungen, die als Verbund mit metallischen Trägermaterialien hergestellt werden, sind spezielle hochbelastbare metallische Werkstoffe zu verwenden, welche auf die metallischen Trägermaterialien (Grundkörper) aufgebracht werden. Häufig werden hochbelastbare Werkstoffe auf Zinnbasis eingesetzt, die gute Gleit-, Einlauf-, Einbett- und Notlaufeigenschaften haben. Außerdem müssen Zusatzelemente eingesetzt werden, wenn die Beschichtung thermisch stärker belastet oder die statische und dynamische Belastung der Beschichtung hoch ist, wie bei stoß- und schlagbeanspruchten Lagern. Typische Anwendungsbeispiele sind hochbelastete Lager in Verdichtern, Kolben und Expansionsmaschinen und Walzanlagen.

Bei hydrodynamischen Gleitlagern, die eine Gleitschicht aus einer Zinnbasislegierung ("Weißmetall") aufweisen, erfolgt die Aufbringung der Legierung im Allgemeinen durch das Schleuder- oder Standgussverfahren. Dabei wird der Grundkörper vorher verzinnt, um eine gute Anbindung der nachfolgend aufgebrachten Legierungsschicht zu erreichen.

Um einen guten Verbund zwischen den metallischen Schichten zu erzielen, ist bisher wegen des Haftproblems eine Vorbehandlung der Bindeoberfläche des metallischen Stützkörpers notwendig. Für einen Verbundguss zwischen metallischen Grundkörpern, wie Stahl, Stahlguss, Grauguss, Bronze und Zinnhaltigen Beschichtungswerkstoffen werden beispielsweise Beizmittel und/oder eine Verzinnung der Bindeoberfläche benötigt. Dies führt zu aufwendigen, kostenintensiven und häufig auch umweltbelastenden Verfahrensschritten. Bei einigen Verfahren und Werkstoffpaarungen sind zusätzliche metallische Zwischenschichten notwendig, was erheblichen Aufwand mit sich bringt.

Aktuell werden derartige Beschichtungen mittels aufwändigen Gussverfahren hergestellt. Diese erfordern eine genaue Temperaturkontrolle und häufig eine Vorbehandlung des Grundmaterials mit meist toxischen Beizen, wie ZinkChlorid-Verbindungen. Außerdem wird eine gießfähige Legierung benötigt, die ohne Seigerungen oder andere Entmischungsphänomene auf dem Trägermaterial aufbringbar ist. Ferner ist bei Gussverfahren eine definierte Erwärmung des Grundkörpers und definierte Kühlung nach dem Ausguss notwendig, um eine gute Qualität des Kristallgefüges, hohe Homogenität und Bindung durch gleichmäßige Temperaturführung in beiden Schichten zu erzielen. Nach dem Aufbringen der zinnhaltigen Metallschicht ist außerdem eine spanabhebende Nachbehandlung notwendig, um der Beschichtung ihre endgültige Form zu verleihen. Dies erfordert das Vorsehen einer Gussanlage und entsprechender Überwachungs- und Nachbearbeitungseinrichtungen. In der Praxis ist es bei komplexen Grundkörpern mit stark schwankenden Materialdicken meist schwierig eine kristallin homogene hochbelastbare Metallschicht aufzugießen.

Die Gruppe der "IWK"-Legierungen sind spezielle Zinnbasislegierungen für Gleitlager mit 11-14 % Antimon, 5-7 % Kupfer, 0,1-3 % Bismut, 0,1-2 % Zink und 0,01-0,5 % Tellur. Diese Gruppe kann mit dem herkömmlichen Schleuder- oder Standgussverfahren nur sehr eingeschränkt verarbeitet werden, da die Verzinnung des Grundkörpers zum Erreichen einer guten Anbindung nicht ausreicht. Es ist eine besondere und aufwendige Verzinn-Verzinkungs-Vorbehandlung notwendig. Aus diesem Grund haben sich die "IWK"-Legierungen, trotz herausragender Eigenschaften, am Markt bisher nicht durchgesetzt.

Es ist daher Aufgabe der vorliegenden Erfindung, die Verwendung einer Legierung und/oder eines Materials zur Herstellung einer Gleitschicht eines hydrodynamischen Gleitlagers und ein Herstellungsverfahren einer Gleitschicht eines hydrodynamischen Gleitlagers unter Verwendung der Legierung und/oder des Materials, insbesondere von Zinnbasis-, Bronze- und Aluminiumlegierungen bereitzustellen, das den Herstellungsprozess vereinfacht und die Gleitlagereigenschaften verbessert. Diese Aufgabe wird durch die Merkmalskombination gemäß Patentanspruch 1 gelöst.

Erfindungsgemäß wird die Verwendung einer der folgenden Legierungen und/oder Materialien, nämlich SnSb8Cu4, SnSb12Cu6Zn, CuSn12Ni2, CuAl10Fe1, Zinn- und Aluminiumbronzen, Aluminiumwerkstoffe und daraus hergestellte Legierungen, zur Herstellung einer Gleitschicht eines Gleitlagers mittels eines laserbasierten Auftragsverfahrens einer dieser Legierungen und/oder Materialien auf einen Grundkörper vorgeschlagen. Die Legierung und/oder das Material zur Auftragsapplikation liegen dabei in der Form eines Pulvers oder eines verdichteten Pulvers bzw. in Drahtform vor.

Bei Verwendung der Legierungen SnSb8Cu4 und SnSb12Cu6Zn ist eine erhöhte Prozesssicherheit, eine gesteigerte Wirtschaftlichkeit und eine verbesserte Bindefestigkeit gegeben. Die Verarbeitung von Zinn- und Aluminium bronzen, wie z.B. von CuSn12Ni2- und CuAl10Fe1-Pulver in laserbasierten Auftragsverfahren ermöglicht neue Gleitschichtzusammensetzungen. Diese Werkstoffe besitzen gute tribologische Eigenschaften in kritischen Betriebsbedingungen. Erhöhte Belastbarkeit, "Downsizing" und erhöhte mechanische Kennwerte bei zugleich erhöhten Temperaturbedingungen sind nur einige Potentiale, die effektiv genutzt werdenkönnen.

Erfindungsgemäß ist vorgesehen, dass die Legierung eine Zinnbasislegierung mit einem Anteil von 11 - 14 % Antimon, 5 - 7 % Kupfer, 0,1 - 3 % Bismut, 0,1 - 2 % Zink und 0,01 - 0,5 % Tellur ist.

Die verwendeten "IWK"-Legierungen können verwendet werden, ohne dass eine aufwendige Vorbehandlung notwendig ist. Die technologischen Eigenschaften der "IWK"-Legierungen, wie z.B. Festigkeit, Zähigkeit, Kriechfestigkeit und Temperaturfestigkeit übertreffen die bisher etablierten Weißmetalllegierungen. Daher ist der Einsatz besonders unter kritischen Betriebsbedingungen denkbar. Durch die höhere Belastbarkeit können außerdem Potentiale durch "Downsizing" genutzt werden.

In einem Ausführungsbeispiel der Erfindung ist vorgesehen, dass die Korngröße des Pulvers 1 - 250 µm beträgt. Auf diese Weise ist die Korngröße der eingesetzten Pulver auf das Verarbeitungsverfahren abgestimmt und dies führt zu optimalen Verarbeitungsergebnissen.

Ferner ist eine Verwendung günstig, bei der die Legierung SnSb12Cu6Zn ohne Kornfeiner aufgetragen wird und in einer weiteren vorteilhaften Variante ist erfindungsgemäß vorgesehen, dass die Legierungen und/oder das Material einen reduzierten Anteil von oder keinen Kornfeiner aufweisen.

Bei diesen Legierungen besteht das Potenzial, durch optionales, selektives Weglassen von Kornfeinern wie z. B. Silber, die für den Gießprozess wegen seiner relativ langsamen Abkühlraten prozesssichernd wirken und somit erforderlich sind, die Pulver so abzuwandeln, dass sich gute Ergebnisse und Gefügelagenaufbauten bei laserbasierten Auftragsverfahren mit ihren hierfür charakteristischen schnellen Abkühlraten generieren lassen. Eine Substitution bzw. ein Weglassen von Kornfeinern würde erhebliche wirtschaftliche Vorteile mit sich führen.

In einer bevorzugten Ausführungsform der Erfindung wird das Pulver bzw. das verdichtete Pulver mittels eines der Verdüsungsverfahren Gasverdüsung, Wasserverdüsung, Gas-/Wasser-Gemisch-Verdüsung bzw. mittels Pulverherstellungsverfahren, wie beispielsweise dem Plasma Rotating Electrode Process (PREP), oder reibleistungsbasierten Pulverproduktionsprozessen hergestellt.

Außerdem wird erfindungsgemäß ein Herstellungsverfahren einer Gleitschicht eines Gleitlagers unter Verwendung einer Legierung und/oder eines Materials gemäß den vorstehenden Merkmalen, mittels eines laserbasierten Auftragsverfahrens auf einen Grundkörper vorgeschlagen. Die Legierung und/oder das Material zur Auftragsapplikation liegen dabei in der Form eines Pulvers oder eines verdichteten Pulvers bzw. auch in Drahtform vor.

Durch eine inverse Beschichtungsstrategie können wesentliche Vorteile bei der Herstellung des Produktes genutzt werden. Es können mikroporenfreie, gegossene Grundkörper, die zu einem späteren Zeitpunkt als Funktionsschicht (Gleit-/Verschleißschutzschicht) dienen, mit beliebigen Werkstoffkombinationen beschichtet werden. Auf dieser Art lassen sich Bauteile generieren, welche im Herstellprozess weniger Energiedichte erfordern, ggf. schneller herzustellen und somit kosteneffizienter sind.

Vorzugsweise wird das Herstellungsverfahren derart ausgeführt, dass das laserbasierte Auftragsverfahren Laserpulverauftragsschweißen oder Laserdrahtschweißen ist.

In einer weiteren vorteilhaften Variante ist erfindungsgemäß vorgesehen, dass die Beschichtung eine Gleitschicht bzw. Verschleißschutzschicht ist und mit einer Dicke von 0,1 - 10 mm auf den Grundkörper aufgetragen wird. Dabei ist günstig, dass die Dicke der Gleitschicht variiert und an den entsprechenden Anwendungsfall angepasst ist.

Weiter vorteilhaft ist es, wenn die Beschichtung als ein Mehrlagenschichtsystem hergestellt wird und ein- oder mehrlagige Pufferlagen aus weiteren Materialien einbezogen werden. Vorteilhaft daran ist, dass die Materialeigenschaften der Beschichtung weiter an den jeweiligen Anwendungsfall angepasst und für diesen optimiert werden.

In einer alternativen Ausführung des vorliegenden Herstellungsverfahrens ist ferner vorgesehen, dass CuSn12Ni2 pulverisiert wird und in Pulverform, gegebenenfalls auch in Drahtform, in dem laserbasierten Verfahren aufgetragen wird, wobei Vor- und/oder Nachwärmungsprozesse angewendet werden. Da dieses Material momentan nur konventionell gegossen wird und somit nicht erhältlich ist, entsteht ein neu verfügbares Pulver für die Beschichtung, das entsprechend vorstehender Merkmale sehr gute Materialeigenschaften für eine Gleitschicht eines Gleitlagers aufweist.

In einem Ausführungsbeispiel der Erfindung ist vorgesehen, dass Grundkörper aus der Legierung unter Hinzunahme der Materialgruppen Zinn- und Aluminiumbronzen sowie weiteren Aluminiumlegierungen hergestellt werden. Dadurch wird die Anbindung der Legierungen und/oder Materialien an den Grundkörper weiter verbessert.

In einer bevorzugten Ausführungsform der Erfindung wird der Grundkörper mittels eines Gießprozesses oder durch additive Fertigung hergestellt und in einem vorteilhaften Ausführungsbeispiel der Erfindung ist vorgesehen, dass der Grundköper eine ebene, zylindrische, konvexe oder konkave Struktur aufweist, unter Einschluss der Möglichkeit, eine Innen- bzw. eine Außenbeschichtung durchzuführen. Diese Grundkörper können im Anschluss ihres Herstellungsprozesses ein- oder mehrseitig sowie innen und außenliegend mit gleichen, oder artfremden, metallischen (Eisen- und Nichteisenmetallen) und/oder nichtmetallischen Pulvern mit einer Korngrößenvarianz von 1 - 250 Mikrometern ggf. unter Einsatz einer oder mehrerer Pufferlagen, die ebenfalls aus beliebigen Materialsystemen aufgebaut sind, mit dem Laserpulverauftragsschweißen bzw. dem Laserdrahtschweißen beschichtet werden. Hierbei wird eine Mehrschichtigkeit ermöglicht.

## Patentansprüche

1. Verwendung einer der folgenden Legierungen und/oder Materialien, nämlich SnSb8Cu4, SnSb12Cu6Zn, CuSn12Ni2, CuAl10Fe1, Zinn- und Aluminiumbronzen, Aluminiumwerkstoffe und daraus hergestellte Legierungen, zur Herstellung einer Gleitschicht eines **hydrodynamischen** Gleitlagers, mittels eines laserbasierten Auftragsverfahrens einer dieser Legierungen und/oder Materialien auf einen Grundkörper, **wobei** die Legierung und/oder das Material zur Auftragsapplikation in der Form eines Pulvers oder eines verdichteten Pulvers oder in Drahtform vorliegt, **dadurch gekennzeichnet, dass** die Legierung eine Zinnbasislegierung mit einem Anteil von 11 - 14 % Antimon, 5 - 7 % Kupfer, 0,1 - 3 % Bismut, 0,1 - 2 % Zink und 0,01 - 0,5 % Tellur ist.

2. Verwendung einer Legierung und/oder eines Materials zur Herstellung einer Gleitschicht eines Gleitlagers gemäß Anspruch 1, wobei die Pulverkorngrenze/Korngröße des Pulvers 1 - 250 µm beträgt.

3. Verwendung einer Legierung und/oder eines Materials zur Herstellung einer Gleitschicht eines Gleitlagers gemäß einem der vorherigen Ansprüche, wobei die Legierung SnSb12Cu6Zn ohne Kornfeiner aufgetragen wird.

4. Verwendung einer Legierung und/oder eines Materials zur Herstellung einer Gleitschicht eines Gleitlagers gemäß einem der vorherigen Ansprüche, wobei die Legierungen und/oder Materialien einen reduzierten Anteil von oder keinen Kornfeiner aufweisen.

5. Verwendung einer Legierung und/oder eines Materials zur Herstellung einer Gleitschicht eines Gleitlagers gemäß einem der vorherigen Ansprüche, wobei das Pulver bzw. das verdichtete Pulver mittels eines der Verdüsungsverfahren Gasverdüsung, Wasserverdüsung oder Gas-/Wasser-Gemisch-Verdüsung oder einem Pulverherstellungsverfahren Plasma Rotating Electrode Process (PREP) oder reibleistungsbasierten Pulverproduktionsprozessen hergestellt wird.

6. Herstellungsverfahren einer Gleitschicht eines hydrodynamischen Gleitlagers unter Verwendung einer Legierung und/oder eines Materials gemäß einem der vorherigen Ansprüche, mittels eines laserbasierten Auftragsverfahrens auf einen Grundkörper, wobei die Legierung und/oder das Material zur Auftragsapplikation in der Form eines Pulvers, eines verdichteten Pulvers oder in Drahtform vorliegt.

7. Herstellungsverfahren einer Gleitschicht eines Gleitlagers gemäß Anspruch 6, wobei das laserbasierte Auftragsverfahren Laserpulverauftragsschweißen oder Laserdrahtschweißen ist.

8. Herstellungsverfahren einer Gleitschicht eines Gleitlagers gemäß Anspruch 6 oder 7, wobei die Beschichtung eine Gleitschicht bzw. Verschleißschutzschicht ist und mit einer Dicke von 0,1 - 10 mm auf den Grundkörper aufgetragen wird.

9. Herstellungsverfahren einer Gleitschicht eines Gleitlagers gemäß einem der Ansprüche 6 bis 8, wobei die Beschichtung als ein Mehrlagenschichtsystem hergestellt wird und ein- oder mehrlagige Pufferlagen aus weiteren Materialien einbezogen werden.

10. Herstellungsverfahren einer Gleitschicht eines Gleitlagers gemäß einem der Ansprüche 6 bis 9, wobei CuSn12Ni2 pulverisiert wird und in Pulverform oder in Drahtform in dem laserbasierten Verfahren aufgetragen wird, wobei Vor- und/oder Nachwärmungsprozesse angewendet werden.

11. Herstellungsverfahren einer Gleitschicht eines Gleitlagers gemäß einem der Ansprüche 6 bis 10, wobei Grundkörper aus der Legierung unter Hinzunahme der Materialgruppen Zinn- und Aluminiumbronzen sowie weiteren Aluminiumlegierungen hergestellt werden.

12. Herstellungsverfahren einer Gleitschicht eines Gleitlagers gemäß einem der Ansprüche 6 bis 11, wobei der Grundkörper mittels eines Gießprozesses oder durch additive Fertigung hergestellt wird.

13. Herstellungsverfahren einer Gleitschicht eines Gleitlagers gemäß einem der Ansprüche 6 bis 12, 4&r wobei der Grundköper eine ebene, zylindrische, konvexe oder konkave Struktur aufweist.

## Claims

1. Use of any of the following alloys and/or materials, namely SnSb8Cu4, SnSb12Cu6Zn, CuSn12Ni2, CuAl10Fe1, tin and aluminum bronzes, aluminum materials and alloys made therefrom, for producing a sliding layer of a hydrodynamic slide bearing, by means of a laser-based application method of one of these alloys and/or materials to a base body, wherein the alloy and/or material for application is in the form of a powder or a compacted powder or in wire form, **characterized in that** the alloy is a tin-based alloy containing 11-14% antimony, 5-7% copper, 0.1-3% bismuth, 0.1-2% zinc and 0.01-0.5% tellurium.

2. Use of an alloy and/or a material for producing a sliding layer of a slide bearing according to claim 1, wherein the powder grain limit/grain size of the powder is 1 - 250 µm.

3. Use of an alloy and/or material for producing a sliding layer of a slide bearing according to any one of the preceding claims, wherein the alloy SnSb12Cu6Zn is applied without inoculant.

4. Use of an alloy and/or material for producing a sliding layer of a slide bearing according to any one of the preceding claims, wherein the alloys and/or materials have a reduced proportion of or no inoculant.

5. Use of an alloy and/or material for producing a sliding layer of a slide bearing according to any one of the preceding claims, wherein the powder or compacted powder is produced by atomization means of one of gas atomization, water atomization or gas/water mixture atomization or a powder production process Plasma Rotating Electrode Process (PREP) or friction power based powder production processes.

6. A method of manufacturing a sliding layer of a hydrodynamic slide bearing using an alloy and/or a material according to any one of the preceding claims, by means of a laser-based application process to a base body, wherein the alloy and/or the material for application is in the form of a powder, a compacted powder or in wire form.

7. The manufacturing method of a sliding layer of a slide bearing according to claim 6, wherein the laser-based deposition method is laser powder cladding or laser wire welding.

8. Manufacturing method of a sliding layer of a slide bearing according to claim 6 or 7, wherein the coating is a sliding layer or wear protection layer and is applied to the base body with a thickness of 0.1 - 10 mm.

9. A method of producing a sliding layer of a slide bearing according to any one of claims 6 to 8, wherein the coating is produced as a multilayer coating system and single- or multilayer buffer layers of further materials are incorporated.

10. A method of manufacturing a sliding layer of a slide bearing according to any one of claims 6 to 9, wherein CuSn12Ni2 is pulverized and applied in powder form or in wire form in the laser-based method, wherein preheating and/or postheating processes are applied.

11. A method of manufacturing a sliding layer of a slide bearing according to any one of claims 6 to 10, wherein base bodies are manufactured of the alloy with the addition of the material groups tin bronzes and aluminum bronzes and further aluminum alloys.

12. A method of manufacturing a sliding layer of a slide bearing according to any one of claims 6 to 11, wherein the base body is manufactured by means of a casting process or by additive manufacturing.

13. A method of manufacturing a sliding layer of a slide bearing according to any one of claims 6 to 12, wherein the base body has a planar, cylindrical, convex or concave structure.

## Revendications

1. Utilisation d'un des alliages et/ou matériaux suivants, à savoir SnSb8Cu4, SnSb12Cu6Zn, CuSn12Ni2, CuAl10Fe1, bronzes à l'étain et d'aluminium, matériaux d'aluminium et alliages fabriqués à partir de ceux-ci, pour la fabrication d'une couche de glissement d'un palier lisse **hydrodynamique,** au moyen d'un procédé d'application au laser d'un de ces alliages et/ou matériaux sur un corps de base,
**dans laquelle** l'alliage et/ou le matériau se présente pour l'application sous la forme d'une poudre ou d'une poudre compactée ou sous la forme d'un fil, **caractérisée en ce que**
l'alliage est un alliage à base d'étain avec une part de 11 à 14 % d'antimoine, 5 à 7 % de cuivre, 0,1 à 3 % de bismuth, 0,1 à 2 % de zinc et 0,01 à 0,5 % de tellure.

2. Utilisation d'un alliage et/ou d'un matériau pour la fabrication d'une couche de glissement d'un palier lisse selon la revendication 1, dans laquelle la limite de grain de poudre/granulométrie de la poudre est comprise entre 1 et 250 µm.

3. Utilisation d'un alliage et/ou d'un matériau pour la fabrication d'une couche de glissement d'un palier lisse selon l'une quelconque des revendications précédentes, dans laquelle l'alliage de SnSb12Cu6Zn est appliqué sans affineur de grain.

4. Utilisation d'un alliage et/ou d'un matériau pour la fabrication d'une couche de glissement d'un palier lisse selon l'une quelconque des revendications précédentes, dans laquelle les alliages et/ou matériaux présentent une part réduite d'affineur de grain ou n'en présentent pas.

5. Utilisation d'un alliage et/ou d'un matériau pour la fabrication d'une couche de glissement d'un palier lisse selon l'une quelconque des revendications précédentes, dans laquelle la poudre ou la poudre compactée est fabriquée au moyen d'un des procédés d'atomisation atomisation de gaz, atomisation d'eau ou atomisation de mélange de gaz et d'eau ou un procédé de fabrication de poudre Plasma Rotating Electrode Process (PREP) ou processus de production de poudre basée sur la puissance de friction.

6. Procédé de fabrication d'une couche de glissement d'un palier lisse hydrodynamique en utilisant un alliage et/ou un matériau selon l'une quelconque des revendications précédentes, au moyen d'un procédé d'application au laser sur un corps de base, dans lequel l'alliage et/ou le matériau se présente pour l'application sous la forme d'une poudre, d'une poudre compactée ou sous la forme d'un fil.

7. Procédé de fabrication d'une couche de glissement d'un palier lisse selon la revendication 6, dans lequel le procédé d'application au laser est un soudage d'application de poudre laser ou soudage de fil laser.

8. Procédé de fabrication d'une couche de glissement d'un palier lisse selon la revendication 6 ou 7, dans lequel le revêtement est une couche de glissement ou couche de protection contre l'usure et est appliqué avec une épaisseur de 0,1 à 10 mm sur le corps de base.

9. Procédé de fabrication d'une couche de glissement d'un palier lisse selon l'une quelconque des revendications 6 à 8, dans lequel le revêtement est fabriqué comme un système stratifié multicouche et des couches tampons à une ou plusieurs couches d'autres matériaux sont intégrées.

10. Procédé de fabrication d'une couche de glissement d'un palier lisse selon l'une quelconque des revendications 6 à 9, dans lequel du CuSn12Ni2 est pulvérisé et est appliqué sous la forme de poudre ou sous la forme d'un fil dans le procédé au laser, dans lequel des processus de pré- et/ou post-chauffage sont utilisés.

11. Procédé de fabrication d'une couche de glissement d'un palier lisse selon l'une quelconque des revendications 6 à 10, dans lequel des corps de base sont fabriqués en l'alliage en ajoutant des groupes de matériau de bronzes à l'étain et d'aluminium ainsi que d'autres alliages d'aluminium.

12. Procédé de fabrication d'une couche de glissement d'un palier lisse selon l'une quelconque des revendications 6 à 11, dans lequel le corps de base est fabriqué au moyen d'un processus de coulée ou par fabrication additive.

13. Procédé de fabrication d'une couche de glissement d'un palier lisse selon l'une quelconque des revendications 6 à 12, dans lequel le corps de base présente une structure plane, cylindrique, convexe ou concave.
